# EUROPÄISCHE PATENTSCHRIFT

(11) **EP 3 329 568 B1**
(45) Veröffentlichungstag und Bekanntmachung des Hinweises auf die Patenterteilung: **29.03.2023**
(21) Anmeldenummer: 16735865.4
(22) Anmeldetag: 05.07.2016
(51) Int. Cl.: H02G 3/08, H02G 3/22, H02G 15/013, H02B 1/30, H02G 3/06, H01B 17/30

(54) **EXPLOSIONSGESCHÜTZTE ANORDNUNG UND VERFAHREN ZU DEREN HERSTELLUNG**
EXPLOSION-PROOF ARRANGEMENT AND METHOD FOR PRODUCING SAME
DISPOSITIF ANTI-EXPLOSION ET SON PROCÉDÉ DE FABRICATION

(30) Priorität: 28.07.2015 DE 102015112285
(43) Veröffentlichungstag der Anmeldung: 06.06.2018
(73) Patentinhaber: R. STAHL Schaltgeräte GmbH, 74638 Waldenburg (DE)
(72) Erfinder: KUTSCH, Maxim, 74081 Heilbronn (DE); ROLL, Fabian, 74547 Untermünkheim (DE)
(74) Vertreter: Rüger Abel Patentanwälte PartGmbB
(86) Internationale Anmeldenummer: PCT/EP2016/065817
(87) Internationale Veröffentlichungsnummer: WO 2017/016817

(56) Entgegenhaltungen:
- EP-A1- 1 841 032
- WO-A1-2013/185979
- WO-A1-2015/062856
- WO-A1-2015/106996
- DE-A1-102012 111 270
- US-A- 5 399 807

## Beschreibung

Die Erfindung betrifft eine explosionsgeschützte Anordnung sowie ein Verfahren zu deren Herstellung. Die explosionsgeschützte Anordnung dient dazu, eine Leitungseinrichtung mit wenigstens einem elektrischen Leiter und/oder wenigstens einen optischen Leiter explosionsgeschützt durch ein Durchführungsteil zu führen. Das Durchführungsteil kann beispielsweise integraler Bestandteil einer Wand eines explosionsgeschützten Gehäuses sein. Das Durchführungsteil kann aber auch ein Einsatz sein, der wiederum in einer Wand eines explosionsgeschützten Gehäuses angeordnet ist.

Die Leitungseinrichtung kann eine elektrische Leitung mit einem oder mehreren isolierten elektrischen Leitern sein.

Das Durchführen von Leitern aus einer explosionsgefährdeten Atmosphäre in einen explosionsgeschützten Raum, z.B. innerhalb eines explosionsgeschützten Gehäuses, ist aufwendig. Es muss dabei sichergestellt werden, dass kein Zünddurchschlag aus dem explosionsgeschützten Raum nach au-ßen in die explosionsgefährdete Atmosphäre gelangen kann.

Aus DE 10 2012 111 270 A1 ist bereits eine explosionsgeschützte Anordnung für mehradrige Kabel bekannt. Die explosionsgeschützte Anordnung weist eine Kabelverbindungseinrichtung mit einer Außenhülse und einer Innenhülse auf. Die Hülsen sind koaxial zueinander angeordnet und das Kabel ist durch die Innenhülse geführt. Die Außenhülse weist einen Krimpabschnitt auf. Dieser besteht aus plastisch verformbarem Material. Die Innenhülse ist elastisch verformbar. Durch das Verformen des Krimpabschnitts der Außenhülse wird eine elastische Verformung der zwischen dem Kabel und der Außenhülse angeordneten Innenhülse erreicht. Da die Kabelummantelung und die Innenhülse aus elastisch verformbarem Material bestehen, wird ein plastischer Materialfluss der Innenhülse und der Kabelummantelung vermieden, so dass kein Setzen des Materials über einen längeren Zeitraum erfolgen kann. Dadurch wird das Anordnen des Kabels in der Kabelverbindungseinrichtung mit zünddurchschlagssicheren Spalten sichergestellt.

WO 2013/185979 A1 offenbart eine Durchführungsanordnung zum Hindurchführen einer Sammelschiene durch eine Wandöffnung in einer Wand eines Gehäuses. Die Durchführungsanordnung hat eine Klemmkörpereinheit, die an der Sammelschiene angeordnet wird. Die Klemmkörpereinheit hat außerdem eine konische Klemmfläche, die an einer konischen Innenfläche einer umschließenden Hülse anliegt. Eine Kappe kann an einem axialen Ende mit der Hülse verschraubt werden. Beim Verschrauben drückt die Kappe die Klemmkörpereinheit in die Hülse und durch die Konizität der Innenfläche der Hülse und der Klemmfläche der Klemmkörpereinheit radial nach innen gegen die Sammelschiene. Auf diese Weise wird eine kraftschlüssige oder reibschlüssige Verbindung mit der Sammelschiene hergestellt.

WO 2015/106996 A1 beschreibt eine Vorrichtung zum zünddurchschlagfreien Hindurchführen eines Bauteils in ein explosionsgeschütztes Gehäuse. Das Bauteil kann eine Leitung sein. Eine Wandöffnung einer Wand hat einen konischen Spannabschnitt, an dem ein Dichtkörper anliegt. Mittels einer Spanneinrichtung wird der Dichtkörper axial gegen den Spannabschnitt gedrängt, wobei er sich geringfügig radial verformt und sich dadurch an das hindurchgeführte Bauteil anlegt.

DE 10 2012 111 270 A1 beschreibt eine explosionsgeschützte Leitungsdurchführung gemäß dem Oberbegriff des Patentanspruches 1. Eine Außenhülse wird in einem Abschnitt plastisch umgeformt und stellt dadurch über eine elastische Innenhülse eine kraftschlüssige Verbindung zu einem hindurchgeführten Kabel her. Ein nicht umgeformter Befestigungsabschnitt mit Außengewinde dient zum Befestigen der Hülse mit einem Gehäuse.

Aus DE 10 2011 086 714 A1 ist eine Schutzeinrichtung für geschirmte und ungeschirmte Leiter in eine Hybridfahrzeug bekannt.

Ausgehend von diesem Stand der Technik kann es als eine Aufgabe der vorliegenden Erfindung angesehen werden, das Herstellen einer explosionsgeschützten Anordnung zur Durchführung einer Leitungseinrichtung mit wenigstens einem Leiter weiter zu vereinfachen.

Diese Aufgabe wird durch eine explosionsgeschützte Anordnung mit den Merkmalen des Patentanspruches 1 sowie ein Verfahren mit den Merkmalen des Patentanspruches 15 gelöst.

Die erfindungsgemäße explosionsgeschützte Anordnung weist wenigstens ein Durchführungsteil, wenigstens einen Verbindungskörper sowie wenigstens eine Leitungseinrichtung mit wenigstens einem elektrischen Leiter und/oder wenigstens einem optischen Leiter auf. Der Leiter ist zumindest entlang des Leitungskanals von einer Ummantelung umschlossen. Die Ummantelung kann dabei zur elektrischen Isolation dienen und/oder zum Schutz vor mechanischen Beschädigungen dienen. Die Leitungseinrichtung kann beispielsweise eine Leitung mit einem oder mehreren isolierten elektrischen Leitern sein. Sie kann durch eine einzige Leitung oder mehrere separate Leitungen oder ein Kabel mit mehreren Leitungen bzw. Adern gebildet sein. Der wenigstens eine Leiter kann aus einem einzigen Draht oder aus mehreren Einzeldrähten oder aus einer oder mehreren optischen Fasern gebildet sein. Der wenigstens eine Leiter kann auch durch eine Schiene bzw. einen Stift oder Bolzen gebildet sein.

In dem wenigstens einen Durchführungsteil sind mehrere Durchführungsöffnungen vorhanden. Die Durchführungsöffnungen erstrecken sich in einer Längsrichtung vollständig durch das Durchführungsteil und wird durch jeweils eine Durchführungsfläche begrenzt.

Für jede durch das Durchführungsteil bzw. eine der vorhandenen Durchführungsöffnungen durchzuführende Leitungseinrichtung ist ein Verbindungskörper vorhanden. Jeder Verbindungskörper hat wenigstens einen sich in Längsrichtung durch den Verbindungskörper erstreckenden Leitungskanal. Durch jeden Leitungskanal eines Führungskörpers erstreckt sich jeweils eine Leitung oder eine Ader oder ein Leiter der Leitungseinrichtung. Im Bereich des betreffenden Leitungskanals ist ein durchgeführter Leiter durch eine Ummantelung elektrisch isoliert. Vorzugsweise wird durch jeden Leitungskanal genau ein Leiter mit geführt.

Der wenigstens eine Verbindungskörper besteht aus einem plastisch verformbaren Material. Der Verbindungskörper ist vorzugsweise integral ohne Naht- und Fügestelle ausgeführt. Durch plastische Verformung eines Verbindungsabschnitts des Verbindungskörpers ist eine mechanische Verbindung zwischen dem Verbindungskörper und der Leitungseinrichtung hergestellt, die durch den wenigstens einen Leitungskanal geführt ist. Die mechanische Verbindung ist durch einen Kraftschluss und optional zusätzlich durch einen Formschluss hergestellt. Bei dem plastischen Umformen des Verbindungsabschnitts drückt das Material des Verbindungskörpers von außen gegen die Leitungseinrichtung bzw. jede Leitung der Leitungseinrichtung, die durch einen der vorhandenen Leitungskanäle geführt ist.

Eine Besonderheit der explosionsgeschützten Anordnung gemäß der vorliegenden Erfindung besteht darin, dass beim kraftschlüssigen Verbinden des Verbindungskörpers mit der Leitungseinrichtung durch das plastische Umformen einer Abschnittsaußenfläche des Verbindungsabschnitts eine erste Begrenzungsfläche gebildet ist. Diese erste Begrenzungsfläche und eine zugeordnete Durchführungsfläche einer jeweils zugeordneten Durchführungsöffnung im Durchführungsteil bilden einen zünddurchschlagsicheren Ex-Spalt. Nach dem Verbinden des Verbindungskörpers mit der Leitungseinrichtung durch das plastische Umformen ist es deswegen ausreichend, den Verbindungskörper mit der ersten Begrenzungsfläche in der Durchführungsöffnung anzuordnen. Die Außenabmessungen der erste Begrenzungsfläche sind an die Innenabmessungen der Durchführungsfläche angepasst, so dass sich durch das Anordnen des Verbindungskörpers bzw. dessen Verbindungsabschnitts in der Durchführungsöffnung und insbesondere durch Einstecken des Verbindungskörpers in Längsrichtung in die Durchführungsöffnung der zünddurchschlagsichere Ex-Spalt bildet. Diese Anordnung kann sehr einfach, kostengünstig und schnell hergestellt werden.

Vorzugsweise wird die plastische Umformung des Verbindungsabschnitts durch Einwirken einer mechanischen Kraft von außen auf den Verbindungsabschnitt erzeugt.

Eine stoffschlüssige Verbindung zwischen dem Verbindungskörper und der Leitungseinrichtung ist vorzugsweise nicht vorgesehen. Das plastische Umformen des Verbindungskörpers wird insbesondere durch einen Umformvorgang wie Fließpressen oder Durchdrücken oder Walzen erreicht.

Der Verbindungskörper besteht aus einem Metall enthaltenden Material, insbesondere aus Stahl bzw. einer Stahllegierung. Das Durchführungsteil kann ebenfalls aus einem Metall enthaltenden Material bzw. aus Stahl hergestellt sein. Es kann alternativ auch aus Kunststoff hergestellt sein. Vorzugsweise ist das Durchführungsteil durch ein Gussteil gebildet.

Der Verbindungskörper liegt unmittelbar und zündspaltfrei an dem Leiter oder der Ummantelung an. Weitere Zwischenschichten zwischen der wenigstens einen Leitungseinrichtung und dem Verbindungskörper sind nicht notwendig.

Vorzugsweise wird durch jeden vorhandenen Leitungskanal lediglich ein Leiter mit einer einzigen diesen Leiter umschließenden Ummantelung hindurch geführt. Ein Kabel mit mehreren Leitern kann zur Durchführung vom Außenmantel befreit und die einzelnen Adern mit Hilfe jeweils eines Verbindungskörpers durch jeweils eine zugeordnete Durchführungsöffnung geführt werden. Das Kabel kann auch insgesamt mit seiner die Adern umgebenden Ummantelung mittels eines einzigen Verbindungskörpers durch eine zugeordnete Durchführungsöffnung geführt werden.

Es ist vorteilhaft, wenn der zünddurchschlagsichere Ex-Spalt als Luftspalt ausgeführt ist. Eine Füllung, beispielsweise durch ein Gussmaterial oder Klebstoff entfällt. Dadurch ist es möglich, die Verbindung zwischen dem Verbindungskörper und dem Durchführungsteil zerstörungsfrei zu trennen.

Es ist außerdem vorteilhaft, wenn die erste Begrenzungsfläche des plastisch verformten Verformungsabschnitts und die Durchführungsfläche jeweils als Flächen ohne Vertiefungen und Vorsprünge ausgeführt sind. Die Flächen sind sozusagen als ebene Flächen ausgeführt. Insbesondere können die beiden Begrenzungsflächen gewindefrei sein. Der sich bei dieser Ausführung ergebende Ex-Spalt hat die Kontur eines in Umfangsrichtung vollständig oder teilweise geschlossenen Ringspalts. Wenn die erste Begrenzungsfläche und die zweite Begrenzungsfläche koaxial zueinander angeordnet sind, ergibt sich ein hohlzylindrischer Ex-Spalt.

Die Querschnittskonturen des Verbindungskörpers bzw. des Verbindungsabschnitts sowie der Durchführungsöffnung sind zur Bildung des Ex-Spalts aneinander angepasst. Vorzugsweise sind die Außenabmessungen der ersten Begrenzungsfläche des plastisch verformten Verbindungsabschnitts etwas kleiner sind als die Innenabmessungen der Durchführungsfläche, so dass der Verbindungsabschnitt ohne Bildung einer Presspassung einfach in der Durchführungsöffnung angeordnet werden kann. Die Querschnittsformen können dabei im Prinzip beliebig gewählt werden. So können die erste Begrenzungsfläche und die Durchführungsfläche bzw. zweite Begrenzungsfläche einen polygonalen, ovalen, elliptischen oder einen anderen beliebigen Querschnitt aufweisen. Es ist bevorzugt, wenn sowohl die beiden Begrenzungsfläche jeweils einen kreisrunden Querschnitt aufweisen.

Es kann bei einem anderen Ausführungsbeispiel der explosionsgeschützten Anordnung auch vorteilhaft sein, wenn die erste Begrenzungsfläche mit einem Außengewinde und die Durchführungsfläche bzw. die zweite Begrenzungsfläche mit einem damit verbindbaren Innengewinde ausgeführt sind. Der Ex-Spalt ist bei diesem Ausführungsbeispiel zumindest abschnittsweise als Gewindespalt ausgeführt. Es ist möglich, den Verbindungskörper in die Durchführungsöffnung einzuschrauben, so dass auch eine Sicherung gegen unerwünschte Relativbewegungen in Längsrichtung erfolgt.

Es ist auch vorteilhaft, wenn sich der Verbindungsabschnitt im Wesentlichen über die gesamte Länge des Verbindungskörpers in Längsrichtung erstreckt. Darunter ist ein Verbindungsabschnitt zu verstehen, dessen Länge in Längsrichtung zumindest 70% oder zumindest 80% oder zumindest 90% der Gesamtlänge des Verbindungskörpers beträgt. Bei einem Ausführungsbeispiel weist der Verbindungskörper zusätzlich zu dem Verbindungsabschnitt nur noch an einem oder beiden axialen Enden jeweils ein Axialendabschnitt auf, der beispielsweise jeweils eine Fase bildet. Zur Herstellung der mechanischen Verbindung mit der Leitungsanordnung wird somit im Wesentlichen der gesamte Verbindungskörper plastisch verformt. Beispielsweise kann der Verbindungskörper durch Fließpressen oder Durchdrücken oder Walzen umgeformt und dadurch mechanisch mit der zugeordneten Leitungseinrichtung verbunden werden, was sehr einfach und kostengünstig ist.

Es ist weiterhin von Vorteil, wenn eine Sicherungseinrichtung vorhanden ist. Die Sicherungseinrichtung ist dazu eingerichtet, den Verbindungskörper an dem Durchführungsteil in Längsrichtung gegen eine ungewollte Relativbewegung zu sichern. Insbesondere wird dadurch sichergestellt, dass der Verformungsabschnitt mit der ersten Begrenzungsfläche die Durchführungsöffnung nicht verlässt, so dass die Länge des Ex-Spalts in Längsrichtung erhalten bleibt. Die Sicherungseinrichtung kann bei einem Ausführungsbeispiel wenigstens ein radial nach außen elastisch verformbares Sicherungsteil aufweisen, beispielsweise einen Sprengring. An dem entgegengesetzten Ende der Durchführungsöffnung kann die Sicherungseinrichtung einen starren Axialanschlag am Durchführungsteil aufweisen. Der Verbindungskörper kann durch den Axialanschlag und das Sicherungsteil gegen eine ungewollte Relativbewegung in Längsrichtung gegenüber dem Durchführungsteil gesichert sein.

Es ist außerdem vorteilhaft, wenn der Verbindungskörper an zumindest einem axialen Ende eine Fase aufweist. Die Fase ist vorzugsweise nur an dem axialen Ende vorgesehen, das vor dem Einstecken des Verbindungskörpers in Längsrichtung der Durchführungsöffnung des Durchführungsteils zugeordnet ist. Dadurch lässt sich die Sicherungseinrichtung, beispielsweise der Sprengring, beim Einstecken des Verbindungskörpers in die Durchführungsöffnung auseinanderdrücken und ermöglicht ein einfaches und werkzeugloses Einstecken des Verbindungsabschnitts bzw. des Verbindungskörpers in die Durchgangsöffnung.

Bei einer Ausführungsform kann die gesamte Sicherungseinrichtung integraler Bestandteil des Durchführungsteils sein und den Verbindungskörper auf beiden axialen Seiten sozusagen umgreifen. Das Durchführungsteil kann bei dieser Ausführung beispielsweise durch zwei miteinander verbindbare Schalen gebildet sein, die nach ihrer Verbindung den Verbindungskörper gegen eine Bewegung in Längsrichtung sichern. Die Schalen weisen jeweils einen Umfangsabschnitt der Durchführungsfläche auf und bilden die Durchführungsöffnung, wenn sie derart miteinander verbunden sind, dass die Umfangsabschnitte sich zu der in Umfangsrichtung geschlossenen Durchführungsfläche ergänzen.

Das Durchführungsteil weist mehrere Durchführungsöffnungen auf. Dabei ist zumindest in einer der vorhandenen Durchführungsöffnungen jeweils ein Verbindungskörper unter Bildung des Ex-Spaltes angeordnet. In solchen Durchführungsöffnungen, in denen kein Verbindungskörper angeordnet ist, ist ein Verschlussmittel, beispielsweise in Form eines Verschlussstopfens, angeordnet, um die betreffende Durchführungsöffnung zu verschließen. Anstelle des Verschlussstopfens können auch andere Verschlussmittel eingesetzt werden. Der Verschlussstopfen kann kraftschlüssig und/oder formschlüssig in der Durchführungsöffnung angeordnet sein. Dabei ist es möglich, je nach Bedarf einen Verschlussstopfen einzusetzen oder herauszunehmen.

Es ist außerdem vorteilhaft, wenn mehrere miteinander verbundene oder verbindbare Durchführungsteile vorhanden sind. Jedes der Durchführungsteile kann eine oder mehrere Durchführungsöffnungen aufweisen. Die Durchführungsteile können kreisförmig oder ringförmig sein und beispielsweise konzentrisch zueinander angeordnet sein. Dadurch ist es möglich, abhängig von der Anzahl der durchzuführenden Leitungseinrichtungen ein oder mehrere Durchführungsteile miteinander zu verbinden und beispielsweise in einer Gehäusewand einzusetzen. Durch das Verbinden mehrerer Durchführungsteile miteinander ist es ausreichend, in der Gehäusewand lediglich eine Durchbrechung vorzusehen. Die miteinander verbundenen Durchführungsteile nehmen eine sich rechtwinkelig zu der Längsrichtung erstreckende zusammenhängende Fläche vorzugsweise ohne Einschnürungen ein, deren Kontur beispielsweise kreisrund, elliptisch, oval oder polygonal ist.

Bei einer Ausführung eines Durchführungsteils mit mehreren Durchführungsöffnungen ist es ferner vorteilhaft, wenn einige der Durchführungsöffnungen Öffnungsquerschnitte aufweisen, die sich von Öffnungsquerschnitten anderer Durchführungsöffnungen unterscheiden. Beispielsweise können Durchführungsöffnungen mit unterschiedlich großen, vorgegebenen oder standardisierten Öffnungsquerschnitten bzw. Öffnungsdurchmessern vorhanden sein.

Es ist außerdem vorteilhaft, wenn für eine Durchführungsöffnung mit einem vorgegebenen Öffnungsquerschnitt mehrere passende Verbindungskörper, mit einem daran angepassten Außenquerschnitt vorhanden sind, wobei sich der wenigstens eine Leitungskanal eines passenden Verbindungskörpers von dem wenigstens einen Leitungskanal anderer passender Verbindungskörpers unterscheidet. Zum Beispiel können die passenden Verbindungskörper jeweils unterschiedlich viele Leitungskanäle haben und/oder die Leitungskanäle verschiedener passender Verbindungskörper können unterschiedliche Konturen oder Flächeninhalte der Kanalquerschnitte aufweisen. Dadurch können Leitungseinrichtungen unterschiedlicher Art oder mit unterschiedlichem Querschnitt in eine bestimmte Durchführungsöffnung unter Verwendung des jeweils passenden Verbindungskörpers eingesetzt werden.

Durch das Vorsehen von einem oder mehreren Durchführungsteilen mit jeweils mehreren Durchführungsöffnungen unterschiedlicher Größe und/oder das Bereitstellen von mehreren passenden Verbindungskörpern für jede Durchführungsöffnung lässt sich ein Baukastensystem aufbauen, bei dem flexibel eine Vielzahl von Leitungseinrichtungen einfach und schnell durch einen Wandabschnitt explosionsgeschützt hindurch geführt werden können.

Die explosionsgeschützte Anordnung lässt sich wie folgt herstellen:
Zunächst wird ein Durchführungsteil mit wenigstens einer Durchführungsöffnung bereitgestellt. Die Durchführungsöffnung ist durch eine jeweilige Durchführungsfläche in Umfangsrichtung begrenzt. Außerdem wird wenigstens ein Verbindungskörper aus einem plastisch verformbaren Material bereitgestellt. Jeder Verbindungskörper hat wenigstens einen sich in Längsrichtung durch den Verbindungskörper erstreckenden Leitungskanal.

Eine Leitungseinrichtung mit wenigstens einem elektrischen bzw. optischen Leiter wird durch den jeweils zugeordneten Leitungskanal des Verbindungskörpers hindurch geführt. Anschließend wird der Verbindungskörper im Bereich seines Verbindungsabschnitts plastisch umgeformt. Die plastisch umgeformte Außenfläche im Verbindungsabschnitt des Verbindungskörpers kann als erste Begrenzungsfläche verwendet werden oder zur Bildung der ersten Begrenzungsfläche nach dem plastischen Umformen weiter bearbeitet werden, beispielsweise durch Einbringen eines Gewindes. Die Querschnittsfläche im Verbindungsabschnitt bzw. der ersten Begrenzungsfläche wird beim plastischen Umformen reduziert. Durch das plastische Umformen erfolgt ein mechanisches Verbinden des Verbindungskörpers mit der Leitungseinrichtung. Diese Verbindung ist kraftschlüssig und optional zusätzlich formschlüssig.

Nach dem Herstellen der mechanischen Verbindung zwischen dem Verbindungskörper und der Leitungseinrichtung wird der Verbindungsabschnitt oder der gesamte Verbindungskörper in der Durchführungsöffnung angeordnet. Die Durchführungsfläche der Durchführungsöffnung stellt eine zweite Begrenzungsfläche dar, wobei zwischen den beiden Begrenzungsflächen ein zünddurchschlagssicherer Ex-Spalt gebildet ist.

Der Verbindungskörper kann anschließend gegen eine unerwünscht große Relativbewegung gegenüber dem Durchführungsteil in Längsrichtung gesichert werden. Diese Sicherung kann auch bereits während des Anordnens des Verbindungsabschnitts in der Durchführungsöffnung erzeugt werden, beispielsweise wenn an der ersten Begrenzungsfläche ein Außengewinde und an der Durchführungsfläche ein Innengewinde vorhanden ist und die beiden Gewinde ineinander geschraubt werden, wodurch sich ein Ex-Spalt in Form eines Gewindespalts ergibt.

Das plastische Umformen des Verbindungsabschnitts bzw. des Verbindungskörpers erfolgt vorzugsweise durch Fließpressen oder Durchdrücken oder Walzen.

Vorteilhafte Ausgestaltungen der Erfindung ergeben sich aus den abhängigen Patentansprüchen, der Beschreibung und der Zeichnungen. Nachfolgend werden bevorzugte Ausführungsbeispiele anhand der beigefügten Zeichnungen im Einzelnen erläutert. Es zeigen:
Fig. 1 eine schematische Darstellung eines Ausführungsbeispiels einer Leitungseinrichtung,
Fig. 2 eine schematische Darstellung eines Ausführungsbeispiels eines unverformten Verbindungskörpers in seinem Ausgangszustand in Seitenansicht radial zu einer Längsrichtung und in einer Frontalansicht in Längsrichtung,
Fig. 3 eine schematische Prinzipdarstellung des Verbindens des Verbindungskörpers aus Fig. 2 mit der Leitungseinrichtung aus Fig. 1,
Fig. 4a und 4b jeweils eine Werkzeugeinrichtung und ein beispielhaftes Verfahren zur Herstellung einer Verbindung zwischen einem Verbindungskörper und einer Leitungseinrichtung,
Fig. 5 die Baueinheit aus einem Ausführungsbeispiel eines Verbindungskörpers und einem Ausführungsbeispiel einer Leitungseinrichtung in schematischer Seitenansicht,
Fig. 6 eine schematische Prinzipdarstellung eines Ausführungsbeispiels einer explosionsgeschützten Anordnung mit der Baueinheit aus Fig. 5,
Fig. 7 ein Ausführungsbeispiel eines Durchführungsteils in einer Frontalansicht in Längsrichtung,
Fig. 8 das Ausführungsbeispiel des Durchführungsteils aus Fig. 7 in einer Draufsicht,
Fig. 9-11 jeweils eine schematische Prinzipdarstellung von Ausführungsbeispielen der explosionsgeschützten Anordnung,
Fig. 12 eine perspektivische Ansicht eines Ausführungsbeispiels von drei miteinander verbindbaren Durchführungsteilen,
Fig. 13-15 jeweils ein Ausführungsbeispiel einer explosionsgeschützten Anordnung unter Verwendung der Durchführungsteile aus Fig. 12,
Fig. 16 ein Ausführungsbeispiel einer explosionsgeschützten Anordnung in perspektivischer Darstellung bei hergestellter Verbindung zwischen den Durchführungsteilen aus den Fig. 12-15 und
Fig. 17 eine Draufsicht auf die Durchführungsteile aus Fig. 16, wobei die Leitungseinrichtungen jeweils im Querschnitt dargestellt sind.

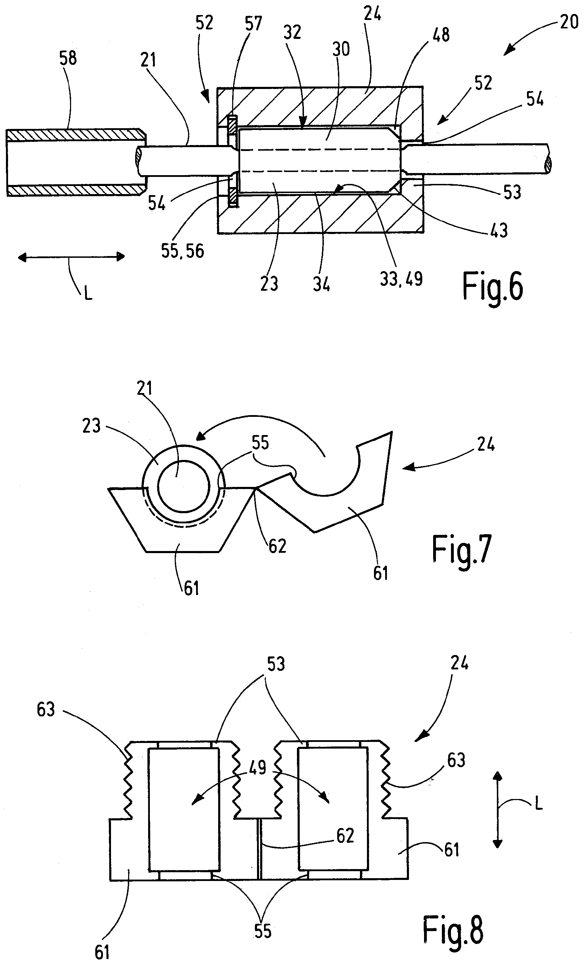

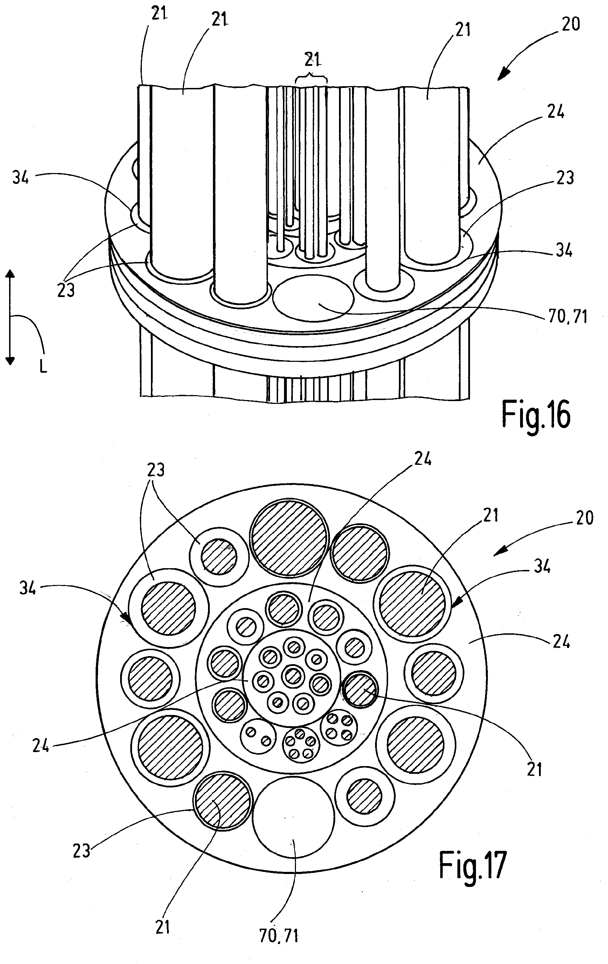

Nachfolgend wird anhand von bevorzugten Ausführungsbeispielen eine explosionsgeschützte Anordnung 20 beschrieben, wie sie beispielsweise in Figuren 6, 9-11 oder 13-17 veranschaulicht ist. Die explosionsgeschützte Anordnung 20 weist eine Leitungseinrichtung 21 mit wenigstens einem elektrischen Leiter 22, wenigstens einem Verbindungskörper 23 sowie wenigstens ein Durchführungsteil 24 auf. Zusätzlich oder alternativ zu dem wenigstens einen elektrischen Leiter 22 kann auch wenigstens ein optischer Leiter vorhanden sein, was in den Ausführungsbeispielen nicht dargestellt ist.

Die explosionsgeschützte Anordnung 20 dient dazu, die Leitungseinrichtung 21 mit dem wenigstens einen Leiter 22 explosionsgeschützt durch eine Wand bzw. einen Wandabschnitt hindurch zu führen, der einen explosionsgeschützten Raum oder Bereich von einer explosionsgefährdeten Atmosphäre trennt. Beispielsweise kann es sich um den Wandabschnitt eines explosionsgeschützten Gehäuses, insbesondere einer druckfesten Kapselung (Ex-d) handeln. Hierfür kann das Durchführungsteil 24 integraler Bestandteil der Wand sein oder als separates Bauteil zünddurchschlagsicher in der Wand angebracht werden, beispielsweise durch eine Gewindeverbindung und/oder eine stoffschlüssige Verbindung (Kleben, Schweißen, etc.).

In der explosionsgeschützten Anordnung 20 ist jeder vorhandenen Leitungseinrichtung 21 ein Verbindungskörper 23 zugeordnet. Die Leitungseinrichtung 21 kann eine Leitung mit einem einzigen Leiter oder mit mehreren Leitern 22 sein. Der beispielsgemäß elektrische Leiter 22 kann als einstückiger Draht oder aus einer Mehrzahl von Drähten in Form einer Litze ausgeführt sein. Zumindest abschnittsweise ist der wenigstens eine elektrische Leiter 22 mit Hilfe einer elektrisch isolierenden Ummantelung 25 isoliert. Der wenigstens eine Leiter 22 kann auch durch einen starren Bolzen gebildet sein, der - anders als elektrische Leitungen bzw. Kabel - quer zu seiner Erstreckungsrichtung durch die üblicherweise auftretenden Querkräfte nicht flexibel biegbar ist.

Der Leitungseinrichtung 21 mit dem wenigstens einen elektrischen Leiter 22 ist jeweils ein Verbindungskörper 23 zugeordnet. Der Verbindungskörper 23 weist wenigstens einen sich in einer Längsrichtung L vollständig durch den Verbindungskörper 23 hindurch erstreckenden Leitungskanal 29 auf. Der Leitungskanal 29 dient dazu, einen Abschnitt der zugeordneten Leitungseinrichtung 21 aufzunehmen. Die Leitungseinrichtung 21 wird hierzu mit ihrem freien Ende in Längsrichtung L in den Leitungskanal 29 eingesteckt und vollständig hindurch geführt. Die Kontur des Leitungskanals 29 ist an die Außenkontur der Leitungseinrichtung 21 angepasst. Zur Hindurchführung einer elektrischen Leitung bzw. eines elektrischen Kabels weist der Leitungskanal 29 beispielsgemäß eine kreisrunde Querschnittskontur auf. Grundsätzlich sind jedoch beliebige andere eckenlose oder Ecken aufweisende Querschnittskonturen realisierbar.

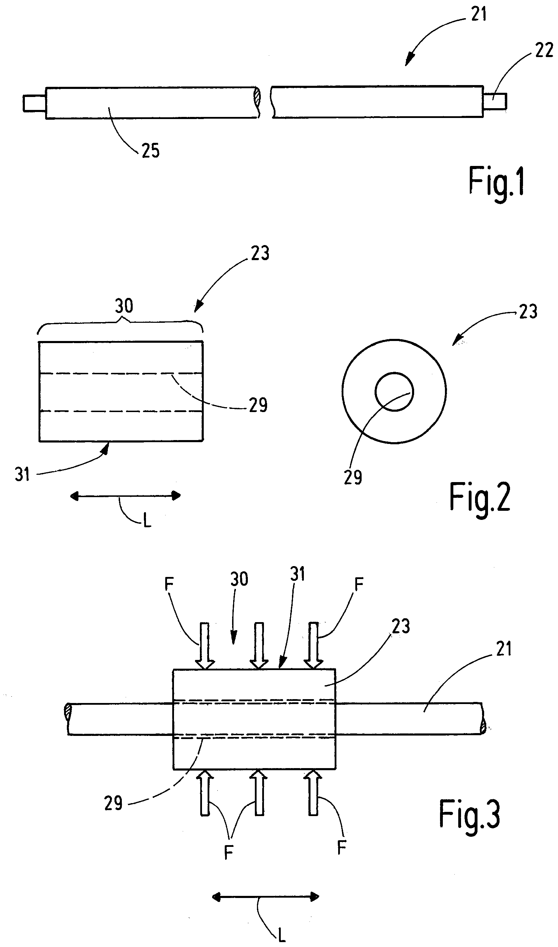

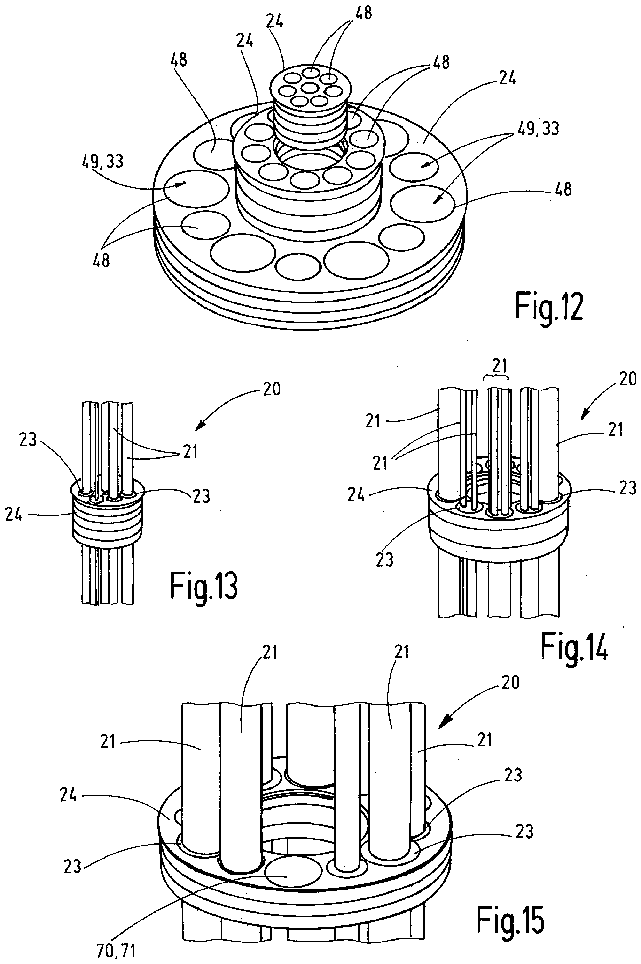

Der Verbindungskörper 23 hat einen Verbindungsabschnitt 30. Beim Ausführungsbeispiel gemäß der Figuren 2, 3, 5, 6 und 11 erstreckt sich der Verbindungsabschnitt 30 im Wesentlichen über die gesamte Länge des Verbindungskörpers 23 in Längsrichtung L. In dem Längsabschnitt des Verbindungskörpers 23, der den Verbindungsabschnitt 30 bildet, wird der Verbindungskörper 23 durch Einwirken einer mechanischen Kraft plastisch umgeformt. Durch diese plastische Umformung verformt sich auch der Leitungskanal 29 im Bereich des Verbindungsabschnitts 30 und legt sich zündspaltfrei an die durch den Leitungskanal 29 hindurch geführte Leitungseinrichtung bzw. die Ummantelung 25 oder den Leiter 22 der Leitungseinrichtung 21 an. Es ist bevorzugt, wenn jeder Leiter 22 der Leitungseinrichtung 21 durch einen separaten Leitungskanal 29 des Verbindungskörpers 23 geführt ist. Weist eine Leitungseinrichtung 21 mehrere separate Leiter 22 auf, so kann der Verbindungskörper 23 entsprechend viele Leitungskanäle 29 aufweisen. Ausführungsbeispiele hierfür sind in den Fig. 14, 16 und 17 schematisch dargestellt.

Die Außenfläche des Verbindungsabschnitts 30 des Verbindungskörpers 23 wird als Abschnittsaußenfläche 31 bezeichnet. Auf diese Abschnittsaußenfläche 31 wird eine Umformkraft F ausgeübt, die in Fig. 3 stark schematisiert veranschaulicht ist. Dabei erhält die Abschnittsaußenfläche 31 ihre gewünschte Kontur und der Verbindungsabschnitt 30 seine gewünschten Querschnittsabmessungen bzw. beispielsgemäß den gewünschten Außendurchmesser. Die plastisch verformte Abschnittsaußenfläche 31 wird nach ihrer plastischen Verformung bzw. Umformung während der und durch die Herstellung der mechanischen Verbindung mit der zugeordneten Leitungseinrichtung 21 als erste Begrenzungsfläche 32 bezeichnet.

Gemeinsam begrenzen die erste Begrenzungsfläche 32 am Verbindungskörper 23 und eine mit der ersten Begrenzungsfläche 32 zusammenwirkende zweite Begrenzungsfläche 33 am Durchführungsteil 24 einen zünddurchschlagsicheren Ex-Spalt 34.

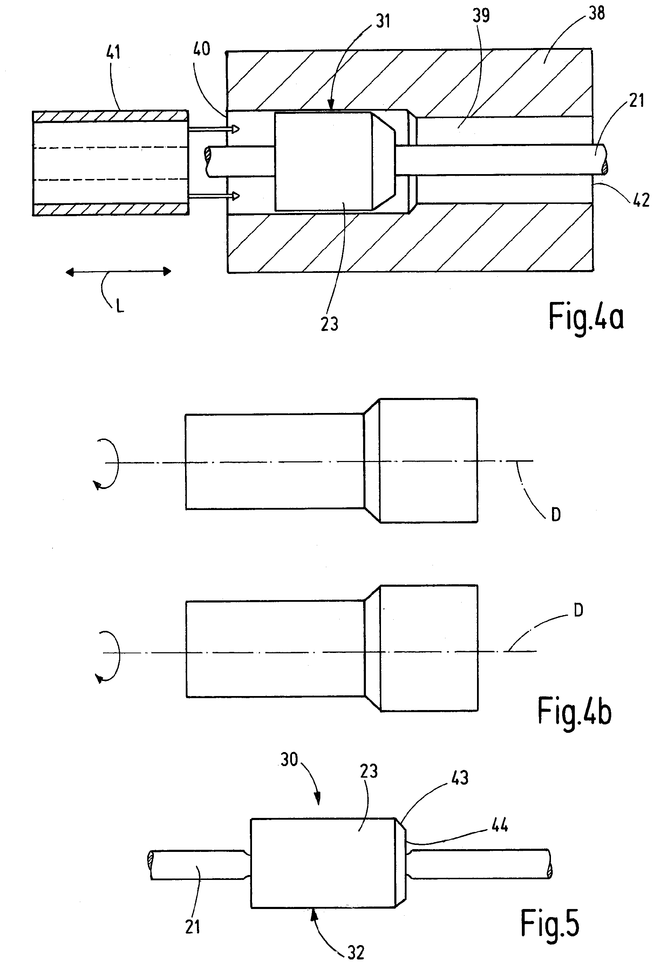

In Fig. 4a ist eine Variante veranschaulicht, mittels der der Verbindungsabschnitt und im Wesentlichen der gesamte Verbindungskörper 23 durch Umformen mechanisch mit der zugeordneten Leitungseinrichtung 21 verbunden und durch das Umformen die erste Begrenzungsfläche 32 an der Abschnittsaußenfläche 31 des Verbindungsabschnitts 30 gebildet werden kann. Bei diesem Ausführungsbeispiel erstreckt sich der Verbindungsabschnitt 30 nahezu über die gesamte Länge des Verbindungskörpers.

Das Umformen des Verbindungskörpers 23 erfolgt gemäß Fig. 4a durch Fließpressen oder Durchdrücken und insbesondere durch Vorwärtsfließpressen. Dieser Vorgang ist stark schematisiert in Fig. 4a veranschaulicht. Der Verbindungskörper 23 und die durch den Leitungskanal 29 hindurch geführte Leitungseinrichtung 21, werden in einer Werkzeugform 38 angeordnet. Die Werkzeugform 38 hat hierzu einen Umformkanal 39, dessen Querschnitt an dem einen, ersten Ende 40 an den Außenquerschnitt des noch nicht umgeformten Verbindungsabschnitts 30 angepasst ist. Die Abschnittsaußenfläche 31 liegt in Umfangsrichtung mit geringem Spiel an der Innenfläche des Umformkanals 39 an. Mit Hilfe eines Stempels 41 wird der Verbindungskörper 23 entlang des Umformkanals 39 vom ersten Ende 40 weg bewegt. Der Kanalquerschnitt des Umformkanals verjüngt sich, wodurch es zu einem Materialfluss kommt. Die Länge des Verbindungskörpers 23 in Längsrichtung L nimmt zu, während die Querschnittsabmessungen im Verbindungsabschnitt 30 abnehmen.

Bei dem hier beschriebenen Ausführungsbeispiel erhält der Verbindungsabschnitt 31 eine kreiszylindrische Gestalt, so dass die erste Begrenzungsfläche 32 von einer Kreiszylindermantelfläche gebildet ist (Fig. 5). Der Stempel 41 kann zwei konzentrisch zueinander angeordnete Stempelteile aufweisen (Fig. 4a), um den Verbindungskörper 23 vollständig durch die Engstelle im Umformkanal 29 hindurch zu bewegen und beispielsweise auch vollständig in eine einzige Richtung durch den Umformkanal 29 zu drücken. Es ist alternativ hierzu auch möglich, auf der dem ersten Ende 40 entgegengesetzten zweiten Ende 42 des Umformkanals 39 einen Auswerfer vorzusehen, der den plastisch umgeformten Verbindungskörper 23 in Richtung zum ersten Ende 40 zurück und aus der Werkzeugform 38 heraus bewegt.

Das plastische Umformen des Verbindungsabschnitts 31 des Verbindungskörpers 23 kann - wie schematisch in Fig. 4b veranschaulicht - auch durch das Walzen des Verbindungsabschnitts 31 zwischen zwei Walzwerkzeugen 37 durchgeführt werden. Als Walzwerkzeuge 37 sind in Fig. 4b beispielhaft Walzen veranschaulicht, die sich um eine jeweilige Drehachse D drehen. Durch den Abstand der beiden Drehachsen D kann der Umformgrad des Verbindungsabschnitts 31 vorgegeben werden. Alternativ zu der Verwendung von Walzen, könnte der Verbindungsabschnitt 41 auch zwischen zwei plattenförmigen Walzwerkzeugen gewalzt werden, deren Abstand den Umformgrad vorgibt und die sich in paralleler Ausrichtung relativ zueinander bewegen, so dass der Verbindungsabschnitt 31 zwischen den plattenförmigen Walzwerkzeugen abrollt.

In den Figuren 5 und 6 ist eine Ausführungsform des Verbindungskörpers 23 veranschaulicht, der im Anschluss an die erste Begrenzungsfläche 32 des Verbindungsabschnitts 30 eine Fase 43 aufweist. Die Fase 43 schließt sich einerseits unmittelbar an die erste Begrenzungsfläche 32 und andererseits unmittelbar an eine Stirnfläche 44 des Verbindungskörpers 23 an, die sich schräg oder rechtwinklig zur Längsrichtung L erstreckt und ein axiales Ende des Verbindungskörpers 23 darstellt. Die Stirnfläche 44 ist beim Ausführungsbeispiel als ebene Ringfläche ausgeführt und umschließt eine Mündung des Leitungskanals 29. Bei diesem Ausführungsbeispiel besteht der Verbindungskörper 23 ausschließlich aus zwei Längsabschnitten, nämlich einem durch die Fase 43 gebildeten Axialendabschnitt und dem Verbindungsabschnitt 30 mit der zylindermantelflächenförmigen ersten Begrenzungsfläche 32. Somit erstreckt sich der Verbindungsabschnitt 30 im Wesentlichen über die gesamte Länge des Verbindungskörpers 23. Darunter ist zu verstehen, dass die Länge des Verbindungsabschnitts 30 den größten Teil der Gesamtlänge des Verbindungskörpers ausmacht, beispielsweise mindestens 70%, 80% oder 90%, und beispielsgemäß zusätzlich lediglich die Fase 43 vorhanden ist.

Bei dem hier beschriebenen Ausführungsbeispiel besteht der gesamte Verbindungskörper 23 aus einem plastisch verformbaren Material und ist integral ohne Naht- und Fügestelle hergestellt. In Abwandlung hierzu könnte es bei Ausführungsbeispielen des Verbindungskörpers 23 ausreichen, wenn der Verbindungsabschnitt 30 aus einem plastisch verformbaren Material besteht. Der Verbindungskörper 23 ist beispielsgemäß aus einem Metall oder einer Metalllegierung und vorzugsweise aus Stahl hergestellt. Um eine elektrische Verbindung mit dem wenigstens einen Leiter 22 zu vermeiden, ist beispielsgemäß die elektrische Isolierung durch die Ummantelung 25 zumindest im Bereich des Leitungskanals 29 vorhanden.

Wie erläutert, wird durch das plastische Umformen des Verbindungsabschnitts 30 eine mechanische und beispielsgemäß kraftschlüssige Verbindung zwischen dem Verbindungskörper 23 und der zugeordneten Leitungseinrichtung 21 hergestellt. Optional kann dabei auch eine formschlüssige Verbindung entstehen, was von der Formgebung der Leitungseinrichtung 21 bzw. der Ummantelung 25 abhängt. Die optionale Ummantelung 25 kann elastisch verformbar sein und beispielsweise aus Kunststoff bestehen. Durch die mechanische, kraft- und/oder formschlüssige Verbindung zwischen dem Verbindungskörper 23 und der Leitungseinrichtung 21 liegt die den Leitungskanal 29 begrenzende Kanalinnenfläche vorzugsweise unmittelbar an der Ummantelung 25 der Leitungseinrichtung 21 an. Die Ummantelung 25 ist bevorzugt durch eine einzige Lage gebildet, die den zugeordneten Leiter 22 umschließt. Mehradrige Kabel können beispielsweise von ihrer Kabelummantelung befreit und die isolierten Adern werden separat durch jeweils einen Leitungskanal 29 des Verbindungskörpers 23 geführt, sofern dies aus Gründen des Explosionsschutzes erforderlich ist. Abhängig von dem verwendeten Kabel, der Anzahl der Adern, der Materialien, usw. kann aber ein einziger Verbindungskörper auf der die Adern umschließenden Kabelummantelung angeordnet und damit zünddurchschlagsicher verbunden und durch eine Durchführungsöffnung 48 geführt werden.

Das Durchführungsteil 24 hat eine Durchführungsöffnung 48, die in Umfangsrichtung von einer Durchführungsfläche 49 begrenzt wird. Die Durchführungsfläche 49 bildet die zweite Begrenzungsfläche 33 zur Bildung des Ex-Spalts 34. Durch das Anordnen des Verbindungskörpers 23 bzw. des Verbindungsabschnitts 30 mit der ersten Begrenzungsfläche 32 in der Durchführungsöffnung 48 mit der Durchführungsfläche 49 begrenzen die einander zugewandten Begrenzungsflächen 32 und 33 den Ex-Spalt 34. Ein Beispiel für eine solche Anordnung ist in Fig. 6 gezeigt. Der Ex-Spalt 34 ist dort als Ringspalt zwischen der ersten Begrenzungsfläche 32 des Verbindungskörpers 23 und der zweiten Begrenzungsfläche 33 der Durchführungsöffnung 48 gebildet.

Der Ex-Spalt 34 ist vorzugsweise ein Luftspalt. Eine stoffschlüssige Verbindung zwischen dem Verbindungskörper 23 und dem Durchführungsteil 24 besteht beispielsgemäß nicht.

Zur axialen Sicherung des Verbindungskörpers 23 in der Durchführungsöffnung 48 kann eine Sicherungseinrichtung 52 vorhanden sein. Zu der Sicherungseinrichtung 52 gehört beim Ausführungsbeispiel nach Fig. 6 ein erster Anschlag 53, der die Durchführungsöffnung 48 in Längsrichtung L an einem Ende begrenzt und radial nach innen vorsteht. Der erste Anschlag 53 hat ein Loch 54 zur Durchführung der Leitungseinrichtung 21. Die Abmessungen des Loches 54 sind so gewählt, dass der Verbindungskörper 23 nicht hindurch passt und durch den Anschlag 53 in seiner Axialbewegung in Längsrichtung L begrenzt ist. Auf der dem ersten Anschlag 53 entgegengesetzten Seite ist die Durchführungsöffnung 48 durch einen zweiten Anschlag 55 der Sicherungseinrichtung 52 begrenzt. Der Abstand in Längsrichtung L zwischen den beiden Anschlägen 53, 55 ist mindestens so groß wie die Länge des Verbindungsabschnitts 30 des Verbindungskörpers 23. Beim Ausführungsbeispiel nach Fig. 6 befindet sich der Verbindungskörper 23 vollständig zwischen den beiden Anschlägen 53, 55. In Abwandlung hierzu könnte zumindest ein Teil des Verbindungskörpers auch über wenigstens einen der beiden Anschläge 53, 55 in Längsrichtung L hinausragen.

Analog zum ersten Anschlag 53 hat auch der zweite Anschlag 55 ein Loch 54 zur Durchführung der zugeordneten Leitungseinrichtung 21. Der zweite Anschlag 55 ist beispielsgemäß durch einen radial zur Längsrichtung L verformbaren bzw. aufweitbaren Körper und beispielsgemäß einen Sprengring 56 gebildet. Der Sprengring 56 ist C-förmig ausgeführt und in Umfangsrichtung um die Längsrichtung L nicht vollständig geschlossen, sondern an einer Stelle geschlitzt, so dass er zum Hindurchführen des Verbindungskörpers 23 aufgeweitet werden kann. In seinem nicht aufgeweiteten Ruhezustand begrenzt er ein Loch 54, dessen Querschnittsabmessung kleiner ist als die des Verbindungskörpers 23 bzw. des Verbindungsabschnitts 30, so dass er die Axialbewegung in Längsrichtung L des Verbindungskörpers 23 begrenzen kann. Der Sprengring 56 sitzt in einer Umfangsnut 57 des Durchführungsteils 24, die radial nach innen offen ist. Der Sprengring 56 steht in seinem nicht aufgeweiteten Ausgangszustand radial nach innen aus der Umfangsnut 57 vor. Um den Sprengring 56 aufweiten zu können, sitzt dieser mit Spiel in der Umfangsnut 57.

Bei dieser Ausführung ist das Vorsehen der Fase 43 am Verbindungskörper 23 vorteilhaft. Über die Fase 43 kann der Sprengring 56 beim Einstecken des Verbindungskörpers 23 in die Durchführungsöffnung 48 radial aufgeweitet werden und am Verbindungsabschnitt 30 bzw. der ersten Begrenzungsfläche 23 während des weiteren Einsteckvorgangs entlanggleiten. Ist der Verbindungsabschnitt 30 bzw. der Verbindungskörper 23 vollständig eingesteckt, liegt der Sprengring 56 nicht mehr an der ersten Begrenzungsfläche 32 an und nimmt seinen nicht aufgeweiteten Ausgangszustand ein, der in Fig. 6 gezeigt ist.

Mit Hilfe einer Hülse 58 oder eines vergleichbaren Werkzeugs kann der Sprengring 56 aufgeweitet und der Verbindungskörper 23 aus der Durchführungsöffnung 48 entnommen werden. Die axiale Bewegungssicherung über die Sicherungseinrichtung 52 ist daher beispielsgemäß so ausgeführt, dass eine lösbare Bewegungssicherung zwischen dem Verbindungskörper 23 und dem Durchführungsteil 24 zur Begrenzung der Relativbewegung in Längsrichtung L besteht. Die Sicherungseinrichtung 52 muss nicht so ausgeführt sein, dass jegliche Relativbewegung vermieden ist. Es ist ausreichend, die Relativbewegung derart zu begrenzen, dass der Ex-Spalt 34 nicht verkürzt wird, um die Zünddurchschlagssicherheit nicht zu beeinträchtigen.

In den Figuren 7 und 8 ist eine weitere Ausführungsvariante eines Durchführungsteils 24 veranschaulicht, das eine Sicherungseinrichtung 52 mit den beiden Anschlägen 53, 55 aufweist. Das Durchführungsteil 24 ist bei dieser Variante aus zwei Schalen 61 bzw. Hälften gebildet, die miteinander verbindbar und/oder verbunden sind. Beim Ausführungsbeispiel sind die beiden Schalen 61 an einer Längskante über ein Filmscharnier 62 miteinander verbunden. Das Filmscharnier 62 bildet eine Schwenklagerstelle, um die die beiden Schalen 61 relativ zueinander geschwenkt werden können. Jede der Schalen 61 weist einen Umfangsabschnitt der Durchführungsöffnung 48 und mithin der Durchführungsfläche 49 auf. Die beiden Anschläge 53, 55 sind ebenfalls jeweils teilweise an einer der beiden Schalen 61 vorhanden. Beispielsgemäß ist an jeder Schale 61 ein halbkreisringförmiger Teil jedes Anschlags 53, 55 vorhanden. Der Verbindungskörper 23 mit der Leitungseinrichtung 21 kann in aufgeklapptem Zustand in eine der Schalen 61 eingelegt werden. Anschließend werden die beiden Schalen 61 durch eine Schwenkbewegung (Fig. 7) so aufeinander angeordnet, dass sich die jeweiligen Abschnitte der Durchführungsfläche 49 bzw. der Anschläge 53, 55 ergänzen und sich die Durchführungsfläche 49 in Umfangsrichtung um den Verbindungsabschnitt 30 bzw. den gesamten Verbindungskörper 23 schließt, wodurch der Ex-Spalt 34 gebildet wird und die explosionsgeschützte Anordnung 20 hergestellt ist.

Das Durchführungsteil 24 gemäß der Figuren 7 und 8 kann ein Gewinde 63 aufweisen, um die explosionsgeschützte Anordnung 20 in eine Gewindeloch einer Wand einzuschrauben.

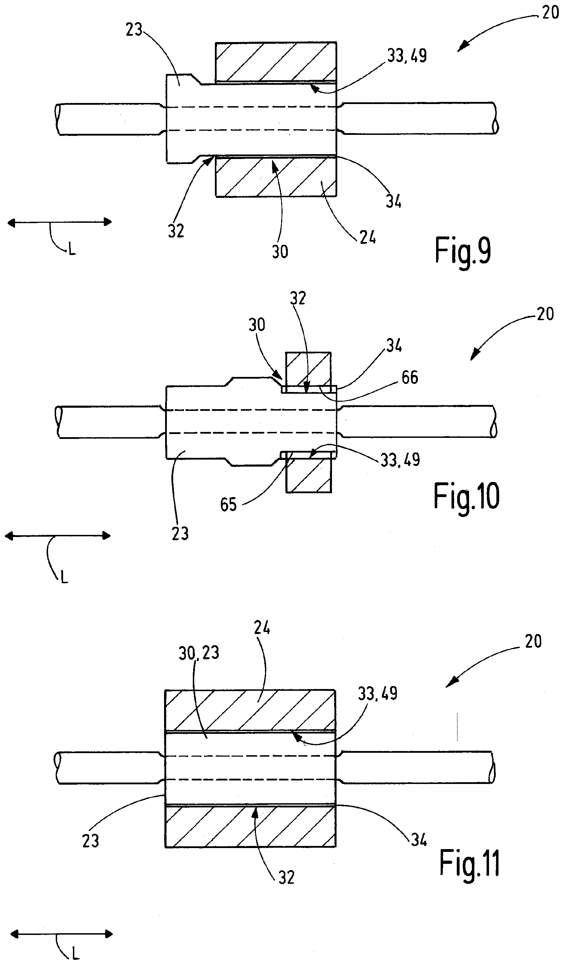

In den Figuren 9-11 sind schematisch weitere Ausführungsvarianten der explosionsgeschützten Anordnung 20 stark vereinfacht dargestellt. Bei der bisher beschriebenen Ausführungsform sowie den Ausführungsbeispielen in den Figuren 9 und 11 sind die Begrenzungsflächen 32, 33 jeweils zylindrisch und vorzugsweise kreiszylindrisch. Sie sind als ebene Flächen ausgeführt. Die bei den bevorzugten Ausführungsbeispielen kantenlos und ohne Vertiefungen bzw. Vorsprünge ausgeführt sind. In Abwandlung hierzu ist es auch möglich, an der ersten Begrenzungsfläche 32 ein Außengewinde 65 und an der zweiten Begrenzungsfläche 33 ein Innengewinde 66 vorzusehen. Bei dieser Ausführung wird der Verbindungskörper 23 mit dem Außengewinde 65 in das Innengewinde 66 des Durchführungsteils 24 geschraubt (Fig. 10). Der Ex-Spalt 34 ist dabei als Gewindespalt ausgeführt. Diese Schraubverbindung stellt gleichzeitig eine Sicherung gegen eine ungewünschte Relativbewegung in Längsrichtung L dar. Die Sicherungseinrichtung 52 ist in diesem Fall durch die Gewinde 65, 66 gebildet.

In den Figuren 12-17 ist ein Baukastensystem für eine explosionsgeschützte Anordnung 20 veranschaulicht. Ein Durchführungsteil 24 kann mehrere Durchführungsöffnungen 48 aufweisen. Vorzugsweise weisen diese Durchführungsöffnungen 48 zumindest teilweise unterschiedliche Querschnittsabmessungen bzw. beispielsgemäß unterschiedliche Durchmesser auf. Abhängig vom Querschnitt der durchzuführenden Leitungseinrichtung 21 kann eine ausreichend große Durchführungsöffnung 48 ausgewählt werden. Jeder Durchführungsöffnung 48 ist ein entsprechender Verbindungskörper 23 zugeordnet, der nach seiner plastischen Umformung der Abschnittsaußenfläche 31 eine erste Begrenzungsfläche 32 aufweist, die an den jeweiligen Innendurchmesser der Durchführungsfläche 49 - die die zweite Begrenzungsfläche 33 bildet - angepasst ist, so dass beim Einstecken der Ex-Spalt 34 gebildet ist (Figuren 13-17).

Es ist vorteilhaft, für eine Durchführungsöffnung 48 mit einem vorgegebenen Innendurchmesser mehrere Verbindungskörper 23 zur Verfügung zu stellen, die unterschiedlich viele Leitungskanäle 29 und/oder Leitungskanäle 29 mit unterschiedlich großen Innendurchmessern und/oder Querschnittskonturen aufweisen. Dadurch kann eine Vielzahl von Kombinationsmöglichkeiten erreicht werden, um die unterschiedlichsten Leitungseinrichtungen 21 durch eine vorhandene Durchführungsöffnung 48 zünddurchschlagssicher hindurch zu führen. Die Anzahl dieser Möglichkeiten wird weiter dadurch erhöht, dass - wie vorstehend beschrieben - mehrere Durchführungsöffnungen 48 vorhanden sein können, die unterschiedliche Innendurchmesser aufweisen können. So können beispielsweise Verbindungskörper 23 an die Durchführung von Standardleitungen bzw. Standardkabeln angepasst werden, indem sie einen oder mehrere Leitungskanäle 29 in entsprechender Anzahl bzw. Größe bereitstellen. Die Außenabmessungen des Verbindungsabschnitts 31 vor dessen plastischer Umformung sind dabei so gewählt, dass abhängig von der Größe und Anzahl der Leitungskanäle 29 eine ausreichende Materialstärke für das plastische Umformen verbleibt. Die Größe der Durchführungsöffnungen 48 im Durchführungsteil 24 sind dann wiederum entsprechend an die sich ergebende Außenabmessung des Verbindungsteils 23 angepasst. Dabei kann auch berücksichtigt werden, dass die Durchführungsöffnungen 48 mit Werkzeugen in Standardgröße (beispielsweise Bohrer, Fräser oder dergleichen) im Durchführungsteil 24 erzeugt werden können.

In den Figuren 15-17 ist zu erkennen, dass solche Durchführungsöffnungen 48 im Durchführungsteil 24, die nicht zur Durchführung einer Leitungseinrichtung 21 benötigt werden, verschlossen sind, um den Explosionsschutz aufrecht zu erhalten. Das Verschließen einer Durchführungsöffnung 48, in der kein Verbindungskörper 23 angeordnet ist, erfolgt mit Hilfe eines Verschlussmittels 70 zündspaltfrei. Als Verschlussmittel 70 dient beispielsgemäß ein Verschlussstopfen 71, der vorzugsweise aus elastisch verformbarem Material besteht und kraftschlüssig und/oder formschlüssig in der jeweils zugeordneten Durchführungsöffnung 48 angeordnet wird. Zusätzlich oder alternativ kann ein Verschlussmittel 70 auch stoffschlüssig in der jeweiligen Durchführungsöffnung 48 fixiert sein.

In den Fig. 12, 16 und 17 ist zu erkennen, dass für eine explosionsgeschützte Anordnung 20 auch mehrere miteinander verbundene bzw. verbindbare Durchführungsteile 24 verwendet werden können. Beispielsgemäß sind konzentrisch bzw. koaxial zueinander angeordnete Durchführungsteile 24 vorgesehen, die ineinander gesteckt werden können. Die Durchführungsteile 24 können kraftschlüssig und/oder formschlüssig und/oder stoffschlüssig miteinander verbunden werden, um sicherzustellen, dass zwischen zwei miteinander verbundenen Durchführungsteilen 24 kein Zündspalt verbleibt.

Beispielsgemäß sind die Durchführungsteile 24 kreisscheibenförmig oder ringförmig. Abhängig von der Anzahl bzw. der Größe der durchzuführenden Leitungseinrichtungen 21 werden ein oder mehrere passende Durchführungsteile 24 ausgewählt und - sofern mehrere Durchführungsteile 24 verwendet werden - miteinander verbunden, so dass sich eine zusammenhängende flächige Anordnung der Durchführungsteile 24 ergibt. In der Wand bzw. dem Wandabschnitt, wird eine entsprechende Aussparung hergestellt und die Durchführungsteile 24 werden darin angeordnet.

Durch diese Ausgestaltung können mit Hilfe des wenigstens einen Durchführungsteils 24 auch mehrere Leitungseinrichtungen 21 explosionsgeschützt durch eine Wand oder einen Wandabschnitt geführt werden, wobei es ausreicht, eine Aussparung in der Wand oder dem Wandabschnitt vorzusehen bzw. einzubringen.

Das Durchführungsteil 24 kann aus Metall, einer Metalllegierung oder einem Kunststoffmaterial oder einem Verbundwerkstoff hergestellt werden. Bei einem Ausführungsbeispiel ist das wenigstens eine Durchführungsteil 24 als Gussteil, beispielsweise als Spritzgussteil ausgeführt.

Die Erfindung betrifft eine explosionsgeschützte Anordnung 20, die dazu eingerichtet ist, wenigstens eine Leitungseinrichtung 21 zünddurchschlagfrei durch eine Wand zu führen. Die Anordnung 20 weist wenigstens ein Durchführungsteil 24 mit wenigstens einer Durchführungsöffnung 48 auf, die in Umfangsrichtung durch eine Durchführungsfläche 49 begrenzt ist. Das wenigstens eine Durchführungsteil 24 ist zur Anordnung in der Wand eingerichtet. Jeder Durchführungsöffnung 48 ist ein Verbindungskörper 23 zugeordnet, der durch wenigstens einen Leitungskanal 29 durchsetzt wird. Durch den Leitungskanal 29 erstreckt sich ein elektrischer oder optischer Leiter 22. Der Leiter 22 kann im Bereich des Leitungskanals 29 mit einer Ummantelung 25 versehen sein, beispielsweise zur elektrischen Isolierung oder zum mechanischen Schutz des Leiters. Der Verbindungskörper 23 hat einen Verbindungsabschnitt 30, der durch plastische Umformung kraftschlüssig und/oder formschlüssig mit dem Leiter 22 verbunden wird. Dabei wird am Verbindungsabschnitt 30 eine erste Begrenzungsfläche 32 ausgebildet. Die Durchführungsfläche 49 stellt eine zweite Begrenzungsfläche 33 dar. Durch Einstecken des Verbindungsabschnitts 30 in die Durchführungsöffnung 48 wird zwischen den beiden Begrenzungsflächen 32, 33 ein zünddurchschlagsicherer Ex-Spalt 34 gebildet.

### Bezugszeichenliste:

- 20: explosionsgeschützte Anordnung
- 21: Leitungseinrichtung
- 22: Leiter
- 23: Verbindungskörper
- 24: Durchführungsteil
- 25: Ummantelung

- 29: Leitungskanal
- 30: Verbindungsabschnitt
- 31: Abschnittsaußenfläche
- 32: erste Begrenzungsfläche
- 33: zweite Begrenzungsfläche
- 34: Ex-Spalt

- 37: Walzwerkzeug
- 38: Werkzeugform
- 39: Umformkanal
- 40: erstes Ende des Umformkanals
- 41: Stempel
- 42: zweites Ende des Umformkanals
- 43: Fase
- 44: Stirnfläche

- 48: Durchführungsöffnung
- 49: Durchführungsfläche

- 52: Sicherungseinrichtung
- 53: erster Anschlag
- 54: Loch
- 55: zweiter Anschlag
- 56: Sprengring
- 57: Umfangsnut
- 58: Hülse

- 61: Schale des Durchführungsteils
- 62: Filmscharnier
- 63: Gewinde des Durchführungsteils

- 65: Außengewinde
- 66: Innengewinde

- 70: Verschlussmittel

- D: Drehachse
- F: Umformkraft
- L: Längsrichtung

## Patentansprüche

1. Explosionsgeschützte Anordnung (20)
mit einem Durchführungsteil (24), das wenigstens eine Durchführungsöffnung (48) mit einer Durchführungsfläche (49) aufweist,
mit wenigstens einem Verbindungskörper (23), der wenigstens einen sich in einer Längsrichtung (L) durch den Verbindungskörper (23) erstreckenden Leitungskanal (29) aufweist,
mit einer Leitungseinrichtung (21), die sich durch den wenigstens einen Leitungskanal (29) erstreckt und wenigstens einen elektrischen und/oder wenigstens einen optischen Leiter (22) aufweist, der zumindest entlang des Leitungskanals (29) von einer Ummantelung (25) umschlossen ist,
wobei der Verbindungskörper (23) aus einem plastisch verformbaren Material besteht und durch plastische Umformung eines Verbindungsabschnitts (30) nach innen auf den wenigstens einen Leiter (22) drückt und dadurch kraftschlüssig mit dem wenigstens einen Leiter (22) der Leitungseinrichtung (21) verbunden ist,
**dadurch gekennzeichnet, dass** der Verbindungsabschnitt (30) unmittelbar und zündspaltfrei an der Ummantelung (25) des wenigstens einen Leiters (22) anliegt,
dass an dem plastisch umgeformten Verbindungsabschnitt (30) eine erste Begrenzungsfläche (32) gebildet ist,
die mit einer durch die Durchführungsfläche (49) gebildeten zweiten Begrenzungsfläche (33) einen zünddurchschlagsicheren Ex-Spalt (34) bildet,
dass das Durchführungsteil (24) mehrere Durchführungsöffnungen (48) aufweist und dass zumindest in einer der vorhandenen Durchführungsöffnungen (48) jeweils ein Verbindungskörper (23) unter Bildung des Ex-Spaltes (34) angeordnet ist und dass die anderen Durchführungsöffnungen (48), in denen kein Verbindungskörper (23) angeordnet ist, mithilfe eines Verschlussmittels (70) verschlossen sind.

2. Explosionsgeschützte Anordnung nach Anspruch 1,
**dadurch gekennzeichnet, dass** die erste Begrenzungsfläche (32) koaxial zu dem Bereich angeordnet ist, in dem eine zünddurchschlagsichere Verbindung zwischen dem Verbindungskörper (23) und der Leitungseinrichtung (21) besteht.

3. Explosionsgeschützte Anordnung nach einem der vorhergehenden Ansprüche,
**dadurch gekennzeichnet, dass** die Anordnung (20) zur Leitungsdurchführung in eine druckfeste Kapselung (EXd) eingerichtet ist.

4. Explosionsgeschützte Anordnung nach einem der vorhergehenden Ansprüche ,
**dadurch gekennzeichnet, dass** der zünddurchschlagsichere Ex-Spalt (34) als Luftspalt ausgeführt ist.

5. Explosionsgeschützte Anordnung nach einem der vorhergehenden Ansprüche,
**dadurch gekennzeichnet, dass** die die erste Begrenzungsfläche (32) und die zweite Begrenzungsfläche (33) jeweils als Flächen ohne Vertiefungen und Vorsprünge ausgeführt sind.

6. Explosionsgeschützte Anordnung nach Anspruch 5,
**dadurch gekennzeichnet, dass** die erste Begrenzungsfläche (32) und die zweite Begrenzungsfläche (33) im Querschnitt jeweils eine eckenlose, gekrümmte Kontur aufweisen.

7. Explosionsgeschützte Anordnung nach einem der Ansprüche 1 bis 4,
**dadurch gekennzeichnet, dass** die erste Begrenzungsfläche (32) ein Außengewinde (65) und die zweite Begrenzungsfläche (33) ein Innengewinde (66) aufweist.

8. Explosionsgeschützte Anordnung nach einem der vorhergehenden Ansprüche,
**dadurch gekennzeichnet, dass** die Länge des Verbindungsabschnitts (30) mehr als 70% oder 80% oder 90% der Länge des Verbindungskörpers (23) beträgt.

9. Explosionsgeschützte Anordnung nach einem der vorhergehenden Ansprüche,
**dadurch gekennzeichnet, dass** der Verbindungskörper (23) an zumindest einem axialen Ende eine Fase (43) aufweist.

10. Explosionsgeschützte Anordnung nach einem der vorhergehenden Ansprüche,
**dadurch gekennzeichnet, dass** eine Sicherungseinrichtung (52) vorhanden ist, mittels der der Verbindungskörper (23) an dem Durchführungsteil (24) in Längsrichtung (L) gesichert ist.

11. Explosionsgeschützte Anordnung nach Anspruch 10,
**dadurch gekennzeichnet, dass** die Sicherungseinrichtung (52) zumindest teilweise integraler Bestandteil des Durchführungsteils (24) ist.

12. Explosionsgeschützte Anordnung nach einem der vorhergehenden Ansprüche,
**dadurch gekennzeichnet, dass** mehrere miteinander verbundene oder verbindbare Durchführungsteile (24) vorhanden sind.

13. Explosionsgeschützte Anordnung nach einem der vorhergehenden Ansprüche,
**dadurch gekennzeichnet, dass** zumindest einige der Durchführungsöffnungen (48) unterschiedlich große Öffnungsquerschnitte aufweisen.

14. Explosionsgeschützte Anordnung nach einem der vorhergehenden Ansprüche,
**dadurch gekennzeichnet, dass** für eine Durchführungsöffnung (48) mit einem vorgegebenen Öffnungsquerschnitt mehrere zugeordnete Verbindungskörper (23) bereitgestellt sind, wobei sich der wenigstens eine Leitungskanal (29) eines zugeordnete Verbindungskörpers (23) von dem wenigstens einen Leitungskanal (29) anderer zugeordneter Verbindungskörpers (23) unterscheidet.

15. Verfahren zur Herstellung einer explosionsgeschützte Anordnung (20) mit folgenden Schritten:
- Bereitstellen eines Durchführungsteils (24), das mehrere Durchführungsöffnungen (48) mit einer Durchführungsfläche (49) aufweist,
- Bereitstellen eines Verbindungskörpers (23) aus einem plastisch verformbaren Material, der einen sich in einer Längsrichtung (L) durch den Verbindungskörper (23) erstreckenden Leitungskanal (29) aufweist,
- Durchführen einer wenigstens einen elektrischen und/oder wenigstens einen optischen Leiter (22) aufweisenden Leitungseinrichtung (21) durch den Leitungskanal (29), wobei der wenigstens eine Leiter (22) zumindest entlang des Leitungskanals (29) eine Ummantelung (25) aufweist,
- plastisches Deformieren des Verbindungskörpers (23) in einem Verbindungsabschnitt (30), wodurch sich die Querschnittsfläche der Außenkontur im Verbindungsabschnitt (30) reduziert und der Verbindungskörper (23) unmittelbar und zündspaltfrei an der Ummantelung (25) des Leiter (22) anliegt, und wodurch eine kraftschlüssige mechanische Verbindung mit dem wenigstens einen Leiter (22) der Leitungseinrichtung (21) hergestellt wird, und Bilden einer ersten Begrenzungsfläche (32) an einer Abschnittsaußenfläche (31) des plastisch umgeformten Verbindungsabschnitts (30),
- Zumindest in einer der vorhandenen Durchführungsöffnungen (48) Anordnen des Verbindungsabschnitts (30) jeweils eines Verbindungskörpers (23), so dass die erste Begrenzungsfläche (32) des Verbindungsabschnitts (30) mit der eine zweite Begrenzungsfläche (33) bildenden Durchführungsfläche (49) einen zünddurchschlagsicheren Ex-Spalt (34) bildet, und
- Verschließen der anderen Durchführungsöffnungen (48), in denen kein Verbindungskörper (23) angeordnet ist, mithilfe eines Verschlussmittels (70).

16. Verfahren nach Anspruch 15,
**dadurch gekennzeichnet, dass** das plastische Deformieren durch Fließpressen erfolgt.

## Claims

1. Explosion-proof assembly (20)
having a bushing part 24 that comprises at least one bushing opening having a bushing surface (49),
having at least one connecting body (23) that comprises at least one conductor channel (29) extending through the connecting body (23) in a longitudinal direction (L),
having a conductor device (21), which extends through the at least one conductor channel (29) and comprises at least one electrical and/or at least one optical conductor (22) that is surrounded by a sheathing (25), at least along the conductor channel (29),
wherein the connecting body (23) is made of a plastically deformable material and presses inwardly onto the at least one conductor (22) as a result of plastic deformation of a connecting portion (30) and is thereby connected in a force-fit manner with the at least one conductor (22) of the conductor device (21),
**characterized in that** the connecting portion (30) abuts directly and without flame gap against the sheathing (25) of the at least one conductor (22),
that on the plastically deformed connecting portion (30) a first delimiting surface (32) is formed that forms a flame-proof Ex-gap (34) together with a second delimiting surface (33) formed by the bushing surface (49),
that the bushing part (24) comprises multiple bushing openings (48) and that at least in one of the present bushing openings (48) one connecting body (23) is arranged respectively under formation of an Ex-gap (34) and that the other bushing openings (48), inside which no connecting body (23) is present are closed by means of a closure means (70).

2. Explosion-proof assembly according to claim 1, **characterized in that** the first delimiting surface (32) is arranged coaxially relative to the region in which a flame-proof connection between the connecting body (23) and the conductor device (21) exists.

3. Explosion-proof assembly according to any of the preceding claims, **characterized in that** the assembly (20) is configured for conductor guide through into a flame-proof enclosure (Ex-d).

4. Explosion-proof assembly according to any of the preceding claims, **characterized in that** the flame-proof Ex-gap (34) is embodied as air gap.

5. Explosion-proof assembly according to any of the preceding claims, **characterized in that** the first delimiting surface (32) and the second delimiting surface (33) are respectively embodied as surfaces without depressions and projections.

6. Explosion-proof assembly according to claim 5, **characterized in that** the first delimiting surface (32) and the second delimiting surface (33) each have a curved contour without corners in cross-section.

7. Explosion-proof assembly according to any of the claims 1 to 4, **characterized in that** the first delimiting surface (32) has an outer thread (65) and the second delimiting surface (33) has an inner thread (66).

8. Explosion-proof assembly according to any of the preceding claims, **characterized in that** the length of the connecting portion (30) is more than 70% or 80% or 90% of the length of the connecting body (23).

9. Explosion-proof assembly according to any of the preceding claims, **characterized in that** the connecting body (23) comprises a chamfer (43) at least at one axial end.

10. Explosion-proof assembly according to any of the preceding claims, **characterized in that** a securing device (52) is provided by means of which the connecting body (23) is secured on the bushing part (24) in longitudinal direction (L).

11. Explosion-proof assembly according to claim 10, **characterized in that** the securing device (52) is at least partly integral part of the bushing part (24).

12. Explosion-proof assembly according to any of the preceding claims, **characterized in that** multiple bushing parts (24) are present that are connected or connectable with one another.

13. Explosion-proof assembly according to any of the preceding claims, **characterized in that** at least some of the bushing openings (48) have opening cross-sections of different dimension.

14. Explosion-proof assembly according to any of the preceding claims, **characterized in that** multiple assigned connecting bodies (23) are provided for a bushing opening (48) with a predefined opening cross-section, wherein the at least one conductor channel (29) of an assigned connecting body (23) differs from the at least one conductor channel (29) of other assigned connecting bodies (23) .

15. Method for producing an explosion-proof assembly (20) comprising the following steps:
- providing a bushing part (24) that comprises multiple bushing openings (48) having a bushing surface (49),
- providing a connecting body (23) made of a plastically deformable material, which comprises a conductor channel (29) extending through the connecting body (23) in a longitudinal direction (L),
- guiding a conductor device (21) comprising at least one electrical and/or at least one optical conductor (22) through the conductor channel (29), wherein the at least one conductor (22) comprises a sheathing (25) at least along the conductor channel (29),
- plastically deforming the connecting body (23) in a connecting portion (30), whereby the cross-section area of the outer contour in the connecting portion (30) reduces and the connecting body (23) abuts directly and without flame gap against the sheathing (25) of the conductor (22), and whereby a force-fit mechanical connection is established with the at least one conductor (22) of the conductor device (21), and forming a first delimiting surface (32) on a portion outer surface (31) of the plastically deformed connecting portion (30),
- arranging the connecting portion (30) of a connecting body (23) respectively at least in one of the present bushing openings (48), so that the first delimiting surface (32) of the connecting portion (30) forms a flame-proof Ex-gap (34) together with the bushing surface (49) forming a second delimiting surface (33), and
- closing the other bushing openings (48) in which no connecting body (23) is arranged by means of a closure means (70).

16. Method according to claim 15, **characterized in that** the plastic deformation is carried out by means of extrusion .

## Revendications

1. Dispositif antidéflagrant (20),
comprenant un élément de passage (24) qui présente au moins une ouverture de passage (48) avec une surface de passage (49),
comprenant au moins un corps de raccordement (23) qui présente au moins un conduit (29) s'étendant dans une direction longitudinale (L) dans le corps de raccordement (23),
comprenant un dispositif de câble (21) qui s'étend dans le conduit (29), au nombre d'au moins un, et présente au moins un conducteur électrique et/ou au moins un conducteur optique (22) qui est entouré d'une gaine (25), au moins le long du conduit (29),
dans lequel le corps de raccordement (23) est constitué d'un matériau plastiquement déformable et, par déformation plastique d'une portion de raccordement (30), appuie vers l'intérieur, sur le conducteur (22), au nombre d'au moins un, et est de ce fait relié par adhérence au conducteur (22), au nombre d'au moins un, du dispositif de câble (21),
**caractérisé en ce que** la portion de raccordement (30) est appliquée directement et sans interstice explosible contre la gaine (25) du conducteur (22), au nombre d'au moins un,
**en ce qu'**il est prévu sur la portion de raccordement (30) plastiquement déformée, une première surface de délimitation (32) qui forme un joint antidéflagrant résistant au claquage (34) avec une deuxième surface de délimitation (33) constituée de la surface de passage (49),
**en ce que** l'élément de passage (24) présente plusieurs ouvertures de passage et **en ce qu'**un corps de raccordement (23) est disposé respectivement au moins dans une des ouvertures de passage (48) existantes, en formant le joint antidéflagrant (34), et **en ce que** les autres ouvertures de passage (48), dans lesquelles il n'est pas prévu de corps de raccordement (23), sont obturées à l'aide d'un moyen d'obturation (70).

2. Dispositif antidéflagrant selon la revendication 1,
**caractérisé en ce que** la première surface de délimitation (32) est disposée de façon coaxiale avec la région dans laquelle il existe une liaison antidéflagrante entre le corps de raccordement (23) et le dispositif de câble (21).

3. Dispositif antidéflagrant selon l'une des revendications précédentes,
**caractérisé en ce que** le dispositif (20) de passage de câble est réalisé dans une enveloppe résistant à la pression (EX-d).

4. Dispositif antidéflagrant selon l'une des revendications précédentes,
**caractérisé en ce que** le joint antidéflagrant résistant au claquage (34) est réalisé sous forme d'espace d'air.

5. Dispositif antidéflagrant selon l'une des revendications précédentes,
**caractérisé en ce que** la première surface de délimitation (32) et la deuxième surface de délimitation (33) sont réalisées chacune sous forme de surface sans creux ni saillies.

6. Dispositif antidéflagrant selon la revendication 5,
**caractérisé en ce que** la première surface de délimitation (32) et la deuxième surface de délimitation (33) présentent chacune en section transversale un contour incurvé dépourvu d'angles.

7. Dispositif antidéflagrant selon l'une des revendications 1 à 4,
**caractérisé en ce que** la première surface de délimitation (32) présente un filet extérieur (65) et la deuxième surface de délimitation (33) présente un filet intérieur (66).

8. Dispositif antidéflagrant selon l'une des revendications précédentes,
**caractérisé en ce que** la longueur de la portion de raccordement (30) correspond à plus de 70 % ou 80 % ou 90 % de la longueur du corps de raccordement (23).

9. Dispositif antidéflagrant selon l'une des revendications précédentes,
**caractérisé en ce que** le corps de raccordement (23) présente un chanfrein (43) à au moins une extrémité axiale.

10. Dispositif antidéflagrant selon l'une des revendications précédentes,
**caractérisé en ce qu'**il est prévu un dispositif de blocage (52) au moyen duquel le corps de raccordement (23) est bloqué sur l'élément de passage (24), dans la direction longitudinale (L).

11. Dispositif antidéflagrant selon la revendication 10,
**caractérisé en ce que** le dispositif de blocage (52) fait partie intégrante de l'élément de passage (24), au moins par portions.

12. Dispositif antidéflagrant selon l'une des revendications précédentes,
**caractérisé en ce qu'**il est prévu plusieurs éléments de passage (24) reliés ou susceptibles d'être reliés les uns aux autres.

13. Dispositif antidéflagrant selon l'une des revendications précédentes,
**caractérisé en ce qu'**au moins quelques-unes des ouvertures de passage (48) présentent des sections d'ouverture de dimensions différentes.

14. Dispositif antidéflagrant selon l'une des revendications précédentes,
**caractérisé en ce que** plusieurs corps de raccordement (23) associés sont mis à disposition pour une ouverture de passage (48) ayant une section d'ouverture prédéfinie, le conduit (29), au nombre d'au moins un, d'un corps de raccordement (23) associé se distinguant du conduit (29), au nombre d'au moins un, d'autres corps de raccordement (23) associés.

15. Procédé de fabrication d'un dispositif antidéflagrant (20), comprenant les étapes suivantes :
- mise à disposition d'un élément de passage (24) qui présente plusieurs ouvertures de passage (48) comportant une surface de passage (49),
- mise à disposition d'un corps de raccordement (23) constitué d'un matériau plastiquement déformable et présentant un conduit (29) s'étendant dans une direction longitudinale (L) dans le corps de raccordement (23),
- introduction d'un dispositif de câble (21) comportant au moins un conducteur électrique et/ou au moins un conducteur optique (22), à travers le conduit (29), le conducteur (22), au nombre d'au moins un, présentant une gaine (25), au moins le long du conduit (29),
- déformation plastique du corps de raccordement (23) dans une portion de raccordement (30), ce qui a pour effet de réduire l'aire de section transversale du contour extérieur dans la portion de raccordement (30) et d'appliquer le corps de raccordement (23) directement et sans interstice explosible contre la gaine (25) du conducteur (22), et d'établir une liaison mécanique par adhérence avec le conducteur (22), au nombre d'au moins un, du dispositif de câble (21) ; et formation d'une première surface de délimitation (32) sur une surface de portion extérieure (31) de la portion de raccordement (30) plastiquement déformée,
- mise en place, au moins dans l'une des ouvertures de passage (48) présentes, de la portion de raccordement (30), respectivement d'un corps de raccordement (23), de sorte que la première surface de délimitation (32) de la portion de raccordement (30) forme un joint antidéflagrant résistant au claquage (34) avec la surface de passage (49) constituant une deuxième surface de délimitation (33), et
- obturation des autres ouvertures de passage (48) dans lesquelles ne sont pas disposés de corps de raccordement (23), à l'aide d'un moyen d'obturation (70).

16. Procédé selon la revendication 15,
**caractérisé en ce que** la déformation plastique est réalisée par formage par fluage.
